# EUROPÄISCHE PATENTSCHRIFT

(11) **EP 1 738 082 B1**
(45) Veröffentlichungstag und Bekanntmachung des Hinweises auf die Patenterteilung: **07.05.2014**
(21) Anmeldenummer: 05741344.5
(22) Anmeldetag: 18.04.2005
(51) Int. Cl.: B64C 1/06, F16B 5/06

(54) **VERBINDUNGSELEMENT**
CONNECTING ELEMENT
ELEMENT DE FIXATION

(30) Priorität: 17.04.2004 DE 102004018736
(43) Veröffentlichungstag der Anmeldung: 03.01.2007
(73) Patentinhaber: Airbus Operations GmbH, 21129 Hamburg (DE)
(72) Erfinder: ROTH, Markus, 89537 Giengen (DE); BARSCH, Joachim, 89174 Altheim (DE)
(74) Vertreter: Kopf, Korbinian Paul
(86) Internationale Anmeldenummer: PCT/EP2005/004095
(87) Internationale Veröffentlichungsnummer: WO 2005/100802

(56) Entgegenhaltungen:
- EP-A- 0 639 482
- DE-A1- 10 053 200
- DE-U1- 29 622 780
- FR-A- 2 422 060

## Beschreibung

Die Erfindung betrifft ein Verbindungselement für die Befestigung von flächen- oder schalenförmigen Bauteilen an Tragwerken, vorzugsweise zur Befestigung von Verkleidungsteilen an einer Struktur eines Luftfahrzeugs.

Zur Befestigung von Verkleidungsteilen an einem tragenden Strukturwerk eines Luftfahrzeugs werden üblicherweise Verbindungselemente in großer Anzahl benötigt. Solche Verbindungselemente müssen eine ganze Reihe von Randbedingungen erfüllen, die mit herkömmlichen, im Stand der Technik bekannten Befestigungselementen, wie Schrauben, Klammern und Nieten etc. nicht erfüllbar sind. Ohne dass damit eine Rangliste festgelegt sein soll, sind als Randbedingungen zu nennen: Schall- und Wärmeisolation, geringes Gewicht der Verbindungselemente, Sicherheit gegen unbeabsichtigtes Lösen, auch bei Extrembeanspruchung, etwa durch Brand infolge Unfällen, leichte Positioniermöglichkeit auch bei schwierigen Einbaubedingungen, geringer Aufwand an Zeit und Werkzeugen zum Verbinden und Lösen bzw. Anbringen und Entfernen der Verbindungselemente.

Aufgabe der vorliegenden Erfindung ist es, ein Verbindungselement der eingangs bezeichneten Art zu schaffen, das den vorgenannten Forderungen gerecht wird, wobei gleichzeitig der Bauaufwand und damit die Herstellkosten eines solchen Verbindungselementes in vertretbarem Rahmen gehalten werden sollen.

Erfindungsgemäß ist ein Verbindungselement nach dem Oberbegriff des Patentanspruchs 1, wie in Dokument DE 100 53 200 A1 beschrieben, gekennzeichnet durch einen bauteilseitigen Halter, an dem ein Einsteckzapfen zumindest senkrecht (Z-Richtung R_{z}) zur Bauteiloberfläche begrenzt einstellbar gehalten ist und durch eine aus elastisch verformbarem Weichmaterial gebildete strukturseitige Aufnahme mit einer Ausnehmung für den Einsteckzapfen die so formschlüssig an die Kontur des Einsteckzapfens angepasst ist, dass dieser mit der Aufnahme eine Schnappverbindung eingeht, wobei die strukturseitige Aufnahme einen Auflageflansch aufweist, mit dem sie flächig an einem strukturseitigen Halter anliegt und in einer senkrecht zur Verbindungsrichtung (Rz) liegenden XY-Ebene einstellbar gelagert und fixierbar ist.

Mit der erfindungsgemäßen Ausbildung eines Verbindungselements können die oben aufgelisteten Anforderungen erfüllt werden. So ist zunächst die Ausgestaltung der Verbindung als Schnappverbindung eine Gewähr dafür, dass ohne Spezialwerkzeug gearbeitet wird.

Die Einstellbarkeit bauteilseitig in Z-Richtung und strukturseitig in XY-Richtung bringt die Möglichkeit, Toleranzen zwischen den zu befestigenden flächen- oder schalenförmigen Bauteilen einerseits und dem Tragwerk bzw. der Struktur eines Luftfahrzeugs andererseits auszugleichen, wobei dieser Ausgleich bzw. die entsprechende Einstellung unmittelbar bei der Durchführung der Verbindung von Hand erfolgen kann. Die Materialauswahl gewährleistet für das gesamte Verbindungselement vergleichsweise geringes Gewicht und gute Wärmeinsolation und kommt insoweit einer zentralen Forderung im Luftfahrzeugbau entgegen.

Bei dem erfindungsgemäßen Verbindungselement ist der Einsteckzapfen so ausgebildet, dass er beim Einschnappen in die Befestigungsstellung der Aufnahme mechanische oder hydraulische Einrichtungen betätigt, die den Auflageflansch in dem strukturseitigen Halter festklemmen. Durch diese Ausgestaltung wird die einmal gefundene Befestigungsposition in der XY-Ebene gleichzeitig mit dem Einschnappen des Einsteckzapfens als endgültige Befestigungsposition festgelegt. Die Sicherung der gewünschten Position des strukturseitigen Halters einerseits und die Fixierung des bauteilseitigen Einsteckzapfens andererseits erfolgt also nicht schrittweise sondern gleichzeitig.

Eine vorteilhafte Ausgestaltung des erfindungsgemäßen Verbindungselements besteht darin, dass die Aufnahme mit zwei in Z-Richtung voneinander beabstandeten Ausnehmungen für den Einsteckzapfen ausgebildet ist. Diese Gestaltung hat den Vorteil, dass zunächst der Einsteckzapfen in die erste der beiden Ausnehmungen eingeführt werden kann, in dieser ersten Stellung eine Positionierung des strukturseitigen Halters durch das Montagepersonal möglich ist und dann eine passgenaue endgültige Fixierung durch Einschnappen in die zweite Ausnehmung die Befestigungsposition erreicht wird.

Eine weitere vorteilhafte Ausgestaltung eines erfindungsgemäßen Verbindungselements besteht darin, dass die Einstellbarkeit in Z-Richtung des Einsteckzapfens durch ein Schraubgewinde erzielt wird. Dadurch lässt sich auch die auf das zu befestigende Bauteil einwirkende Haltekraft in Grenzen einstellen. Das Schraubgewinde soll vorzugsweise zwischen dem bauteilteilseitigen Halter und einem Verankerungsteil des Einsteckzapfens angeordnet sein.

Eine weitere vorteilhafte Ausgestaltung, die darin besteht, dass der Einsteckzapfen im Verankerungsteil mit einem Kugelgelenk gehalten ist, dient der leichten Positionierbarkeit des strukturseitigen Halters.

Schließlich ist eine weitere vorteilhafte Ausgestaltung hervorzuheben, die darin besteht, dass die Aufnahme vorzugsweise am Auflageflansch Verankerungen aufweist, durch die eine U-förmige Sicherungsklammer in den Körper der Aufnahme einsteckbar ist, wobei der Abstand der U-Schenkel auf den Durchmesser des Fußes des Einsteckzapfens so abgestimmt ist, dass ein Herausziehen des Einsteckzapfens bei eingesteckter Sicherungsklammer nicht möglich ist. Eine solche Ausgestaltung des Verbindungselements garantiert das sogenannte "Fail-save-Verhalten" des Verbindungselements, in dem selbst dann, wenn durch übermäßige Kräfte oder durch übermäßige Temperatur, z. B. infolge eines Brandes der Körper der strukturseitigen Aufnahme zerstört ist, sich die Verbindung zwischen dem Bauteil und der Struktur nicht vollständig lösen kann. Im Falle eines Luftfahrzeugs ist das von großer Bedeutung, indem dort unter allen Umständen zu vermeiden ist, dass etwa im Passagierraum infolge einer unvorhergesehenen Beschädigung des Verbindungselements bzw. der Verbindungselemente sich lösende Teile die Passagiere gefährden.

Anhand der beigefügten Zeichnungen wird die Erfindung beispielsweise erläutert.

In den Zeichnungen zeigt:
- Fig. 1: einen Schnitt durch eine mit einem erfindungsgemäßen Verbindungselement gestaltete Verbindung zwischen einem Verkleidungsteil und der Struktur eines Luftfahrzeugs, schematisch,
- Fig. 2: die Einleitung der Klemmkraft zum Festklemmen des strukturseitigen Halters schematisch
- Fig. 3: eine vereinfachte Teilansicht, entsprechend der Linie III-III aus Fig. 1,
- Fig. 4: ein Schrägbild der strukturseitigen Aufnahme mit in die Position 1 eingeschnapptem Einsteckzapfen,
- Fig. 5: einen Teilschnitt durch die strukturseitige Aufnahme in Schließstellung entsprechend Fig. 1,
- Fig. 6: die Sequenz der Befestigung eines Verkleidungsteils an der Struktur eines Luftfahrzeugs mittels eines Verbindungselementes entsprechend der Fig. 1 bis 4 mit Position 1 und Position 2.

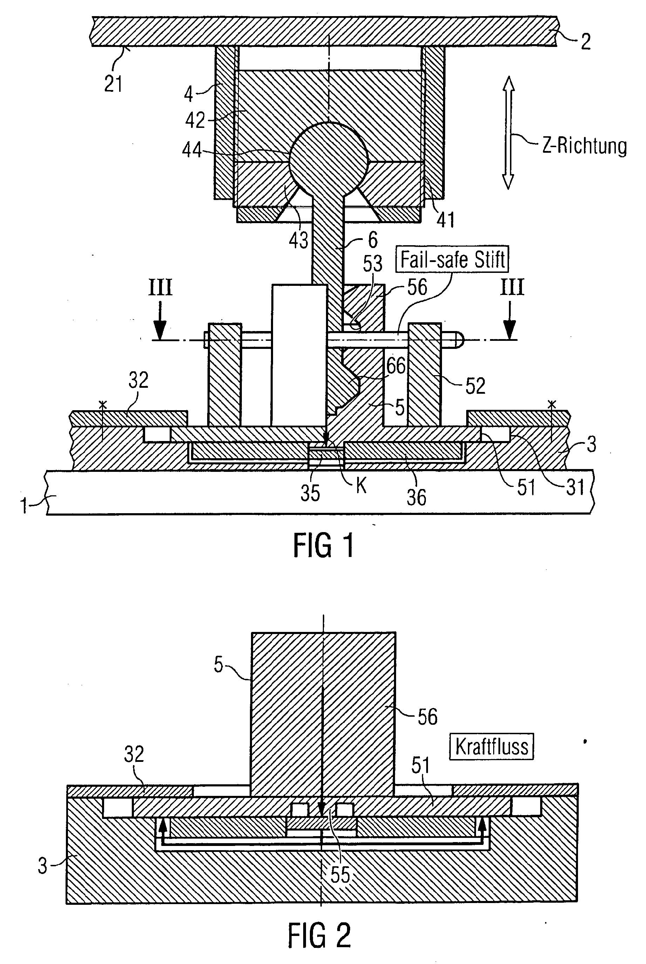

In der schematischen Schnittdarstellung gemäß Fig. 1 ist die Befestigung eines Verkleidungsteils 2 an der Struktur 1 eines Luftfahrzeugs gezeigt. Die Befestigung erfolgt mittels eines Verbindungselementes, das bauteilseitig einen Halter 4 in Form einer zylindrischen Büchse umfasst, die ihrerseits auf der Oberfläche 21 des Bauteils 2 befestigt ist. Der bauteilseitige Halter 4 weist auf seiner Innenseite ein Gewinde 41 auf, in dem ein Verankerungsteil 42 eingeschraubt ist. In einer Kugelpfanne 44 des Verankerungsteils 42 ist der kugelförmige Kopf eines Einsteckzapfens 6 gelagert und mittels eines Zapfenhalters 43 gesichert. Der Einsteckzapfen 6 ist somit in dem entstehenden Kugelgelenk begrenzt schwenkbar. Durch Ein- bzw. Ausschrauben des Gewindes 41 ist die Position des Einsteckzapfens 6 in Z-Richtung einstellbar. Das untere Ende des Einsteckzapfens 6 bildet ein beidseitig abgeschrägter im Durchmesser vergrößerter Fuß 66. Dieser Fuß 66 ist in der gezeigten Stellung nach Fig. 1 in der unteren, von zwei gleichartig ausgebildeten Ausnehmungen 53 eines zylindrischen Körpers 56, des in seiner Gesamtheit als strukturseitige Aufnahme bezeichneten Bauteils 5 formschlüssig gehalten (Position 2).

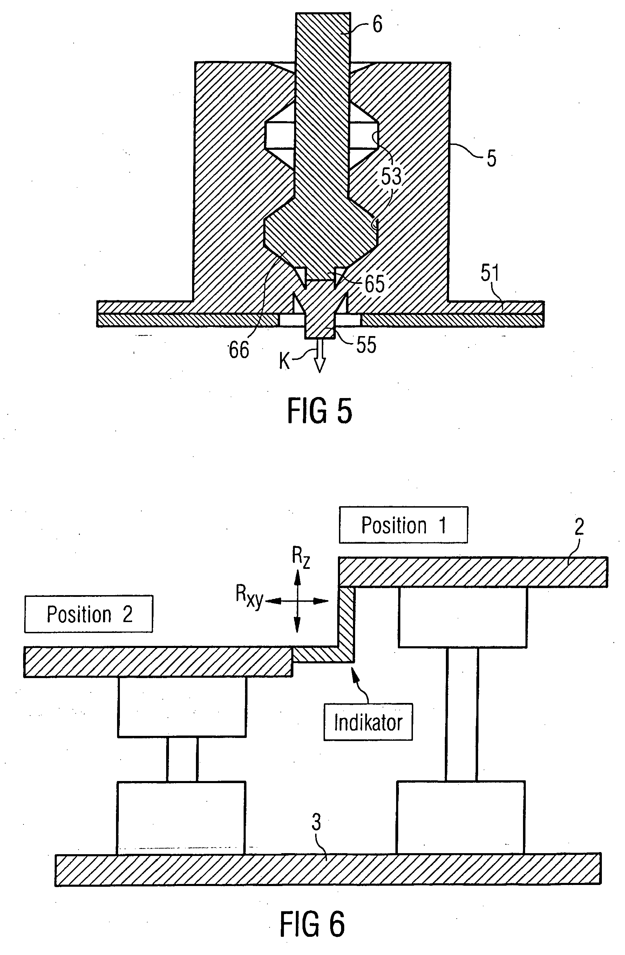

Am zylindrischen Körper 56 des Bauteils 5 schließt sich nach unten ein Auflageflansch 51 an, der flächig in einer flachen Ausnehmung 31 eines strukturseitigen Halters 3 anliegt und durch eine Halteplatte 32 am strukturseitigen Halter 3 gesichert ist. Die Tiefe der flachen Ausnehmung 31 ist geringfügig größer als die Dicke des Auflageflansches 51. In der gezeigten Position 1 nach Fig. 1 ist die strukturseitige Aufnahme 5 über den Auflageflansch 51 im strukturseitigen Halter 3 festgeklemmt, was dadurch erfolgt, dass ein Bolzen 65 am unteren Ende des Einsteckzapfens 6 (vergl. Fig. 5), entsprechend der gezeigten Wirkungslinie einer Kraft K über einen Zwischenbolzen 55 der Aufnahme 5 eine mechanische oder hydraulische Einrichtung 35 betätigt, die ihrerseits entlang des Wirkungswegs 36 eine Klemmkraft auf den Auflageflansch 51 gegenüber der Halteplatte 32 bewirkt.

In Fig. 2 ist die Einleitung der Klemmkraft zum Festklemmen der strukturseitigen Aufnahme 5 in dem strukturseitigen Halter 3 schematisch dargestellt. Gleiche Bauteile sind mit gleichen Bezugszeichen versehen wie in Fig. 1. Die Ausführung der Übertragung der Kraft K zur Einleitung einer Klemmkraft zwischen dem Auflageflansch 51 und dem strukturseitigen Halter 3 erfolgt vorzugsweise durch mechanische Hebel bzw. Schubstangen, könnte jedoch auch hydraulisch erfolgen.

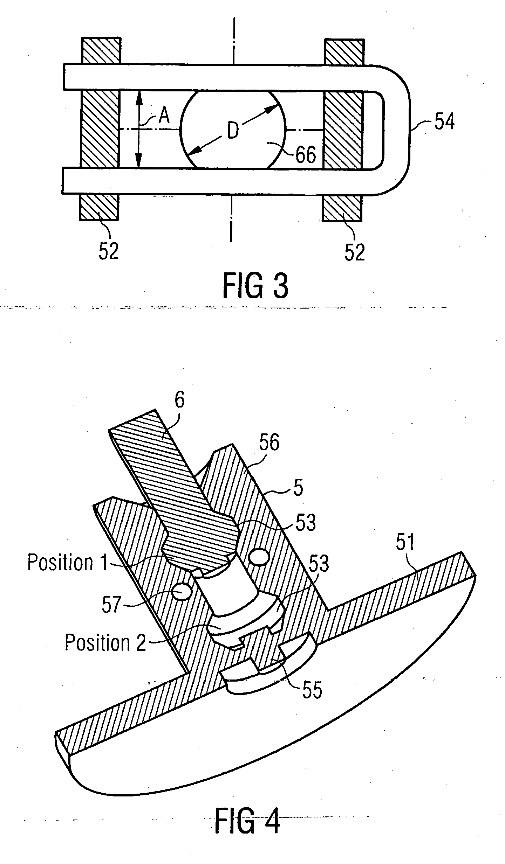

Die in Fig. 3 gezeigte vereinfachte Teilansicht entsprechend der Linie ll-II aus Fig. 1 zeigt die Sicherung des Einsteckzapfens 6 in der strukturseitige Aufnahme 5 mittels einer U-förmigen Sicherungsklammer 54. Hierzu sind am Auflageflansch 51 Verankerungen 52 befestigt, die fluchtende Bohrungen aufweisen, durch welche die Sicherungsklammer 54 mit ihren beiden U-Schenkeln hindurchsteckbar ist. Vorzugsweise sind die Bohrungen im Durchmesser so auf die Schenkel der Sicherungsklammer 54 abgestimmt, dass ein Klemmsitz erreicht wird. Es kann jedoch auch die Sicherungsklammer 54 an den beiden Enden der U-Schenkel jeweils ihrerseits noch einmal gegen Herausrutschen aus den Verankerungen 52 gesichert sein. Der Abstand A der U-Schenkel ist so auf den Durchmesser D des Fußes 66 des Einsteckzapfens 6 abgestimmt, dass ein Herausziehen des Einsteckzapfens bei eingesteckter Sicherungsklammer nicht möglich ist. Selbst wenn also der zylindrische Körper 56 der strukturseitigen Aufnahme 5 zerstört wäre, sei es durch mechanischen Bruch oder durch Brand würde der Einsteckzapfen 6 von der Sicherungsklammer 54 strukturseitig festgehalten werden. Die Sicherungsklammer 54 und Verankerungen 52 bestehen vorzugsweise aus metallischem Werkstoff, während die übrigen Bauteile des Verbindungselements vorzugsweise aus Kunststoffmaterial hergestellt sind, wobei sich besonders Elastomere eignen. Anstelle einer U-förmigen Sicherungsklammer 54 sind auch einzelne Sicherungsstifte möglich.

Die in Fig. 4 gezeigte Schrägbilddarstellung der strukturseitigen Aufnahme 5 mit dem in Position 1 eingeschnappten Einsteckzapfen 6 und der Teilschnitt durch die strukturseitige Aufnahme 5 gemäß Fig. 5 veranschaulichen die Einwirkung des Bolzens 65 am Fuß 66 des Einsteckzapfens 6 auf den entsprechenden Bolzen 55 zur Erzeugung einer Klemmkraft K. Im Schrägbild nach Fig. 4 befindet sich der Einsteckzapfen 6 in Position 1, d. h. in einer Position in der der Auflageflansch 51 in der flachen Ausnehmung 31 des strukturseitigen Halters 3 in einer XY-Ebene noch verschiebbar ist. Dadurch kann sich die strukturseitige Aufnahme 5 vor dem Befestigen einer gewünschten Position des zu befestigenden Bauteils 2 anpassen. Schließlich sind im Schrägbild nach Fig. 4 Bohrungen 57, 58 für die Aufnahme der Schenkel der Sicherungsklammer 54 gezeigt.

Der Vorteil einer passgenauen Montage und Befestigung von flächen- oder schalenförmigen Bauteilen mittels der beschriebenen Verbindungselemente wird anhand der in Fig. 6 gezeigten Sequenz für die Befestigung mit Position 1 und Position 2 beschrieben: Position 1 ist die Positionierstellung, in der der Einsteckzapfen 6, wie in Fig. 4 gezeigt, in der oberen Ausnehmung 53 der strukturseitigen Aufnahme 5 eingeschnappt ist.

In dieser Stellung kann das Verbindungselement gegenüber dem strukturseitigen Halter 3 begrenzt in der XY-Ebene verschoben werden. Dabei zeigt ein vorgesehener Indikator, der nach mechanischer oder aber auch elektrischer oder elektronischer Art ausgebildet sein kann, dem Montagepersonal die notwendige Verschiebung des Bauteils 2 anzeigt, um in eine Position zu gelangen, die in der zweiten Position, d. h. der Befestigungsstellung des Verbindungselements einen absolut passgenauen Anschluss an bereits vorhandene Bauelemente gewährleistet. In gleicher Weise dient der Indikator dazu, den Abstand des Bauteils 2 in Z-Richtung von seiner endgültigen Position anzuzeigen. Weicht dieser Abstand von einem vorgegebenen Wert ab, um in der Position 2, nämlich der Befestigungsstellung die gewünschte Endhöhe in Z-Richtung zu erreichen, kann am bauteilseitigen Halter bzw. am Verankerungsteil durch Veränderung des Abstandes (Schraubgewinde 41) die korrekte Höhe eingestellt werden, so dass dann nach Einschnappen in Position 2 die gewünschte genaue Endstellung des Bauteils 2 erreicht wird.

### Bezugszeichenliste

- 1: Struktur
- 2: Verkleidungsteil (Bauteil)
- 21: Bauteiloberfläche
- 3: strukturseitiger Halter
- 31: flache Ausnehmung
- 32: Halteplatte
- 35: mechanische oder hydraulische Einrichtungen
- 4: bauteilseitiger Halter
- 41: Gewinde
- 42: Verankerungsteil
- 43: Zapfenhalter
- 44: Kugelpfanne
- 5: strukturseitige Aufnahme
- 51: Auflageflansch
- 52: Verankerungen
- 53: Ausnehmungen in 5
- 54: U-förmige Sicherungsklammer
- 55: Zwischenbolzen
- 56: zylindrischer Körper
- 57: Bohrungen in 56
- 58: Bohrungen
- 6: Einsteckzapfen
- 65: Bolzen
- 66: Fuß
- R_{z}: Verbindungsrichtung

## Patentansprüche

1. Verbindungselement für die Befestigung von flächen- oder schalenförmigen Bauteilen an Tragwerken, vorzugsweise zur Befestigung von Verkleidungsteilen (2) an einer Struktur (1) eines Luftfahrzeugs, mit einem bauteilseitigen Halter (4), an dem ein Einsteckzapfen (6) zumindest senkrecht (Z-Richtung R_{z}) zur Bauteiloberfläche (21) begrenzt einstellbar gehalten ist und durch eine aus elastisch verformbarem Weichmaterial gebildete strukturseitige Aufnahme (5) mit einer Ausnehmung (53) für den Einsteckzapfen (6) die so formschlüssig an die Kontur des Einsteckzapfens angepasst ist, dass dieser mit der Aufnahme (5) eine Schnappverbindung eingeht, wobei die strukturseitige Aufnahme (5) einen Auflageflansch (51) aufweist, mit dem sie flächig an einem strukturseitigen Halter (3) anliegt und in einer senkrecht zur Verbindungsrichtung (R_{z}) liegenden XY-Ebene einstellbar gelagert und fixierbar ist, dadurch gekennzeichnit, daß der Einsteckzapfen derart ausgebildet ist, dass er beim Einschnappen in die Befestigungsstellung der Aufnahme (5) mittels eines Bolzens (65) mechanische oder hydraulische Einrichtungen (35, 55) betätigt, die den Auflageflansch (51) in dem strukturseitigen Halter (3) festklemmen.

2. Verbindungselement nach den Ansprüchen 1, **dadurch gekennzeichnet, dass** die Aufnahme (5) mit zwei in Z-Richtung voneinander beabstandeten Ausnehmungen (53) für den Einsteckzapfen (6) ausgebildet ist.

3. Verbindungselement nach Anspruch 1 oder 2, **dadurch gekennzeichnet, dass** die Einstellbarkeit in Z-Richtung des Einsteckzapfens (6) durch ein Schraubgewinde (41) erzielt wird.

4. Verbindungselement nach einem der vorhergehenden Ansprüche 1 bis 3, **dadurch gekennzeichnet, dass** das Schraubgewinde (41) zwischen dem bauteilseitigen Halter (4) und einem Verankerungsteil (42) des Einsteckzapfens (6) angeordnet ist.

5. Verbindungselement nach einem der vorhergehenden Ansprüche 1 bis 4, **dadurch gekennzeichnet, dass** der Einsteckzapfen (6) im Verankerungsteil mit einem Kugelgelenk gehalten ist.

6. Verbindungselement nach einem der vorhergehenden Ansprüche 1 bis 5, **Dadurch gekennzeichnet, dass** die Fixierung der strukturseitigen Aufnahme (5) an dem Auflageflansch (51) mittels einer an dem strukturseitigen Halter (3) befestigbaren Halteplatte (32) erfolgt.

7. Verbindungselement nach einem der vorhergehenden Ansprüche 1 bis 6, **dadurch gekennzeichnet, dass** die Aufnahme (5) vorzugsweise am Auflageflansch (51) Verankerungen (52) aufweist, durch die eine U-förmige Sicherungsklammer (54) in den Körper (56) der Aufnahme (5) einsteckbar ist, wobei der Abstand (A) der U-Schenkel auf den Durchmesser (D) des Fußes (66) des Einsteckzapfens (6) so abgestimmt ist, dass ein Herausziehen des Einsteckzapfens bei eingesteckter Sicherungsklammer nicht möglich ist.

8. Verbindungselement nach einem der vorhergehenden Ansprüche 1 bis 7, **dadurch gekennzeichnet, dass** das Weichmaterial der Aufnahme (5) ein Elastomer ist.

## Claims

1. A connection element for attaching planiform or dish-shaped components to supporting structures, preferably for attaching trim parts (2) to a structure (1) of an aircraft, comprising a holder (4) on the component, on which retainer (4) an insertion pin (6) is held so as to be adjustable to a limited extent at least vertically (Z-direction R_{z}) in relation to the component surface (21) and matches a receiver (5) on the structure, which receiver (5) is made from elastically deformable soft material with a recess (53) for the insertion pin (6), which recess (5) matches the contour of the insertion pin in such a way, having positive fit, that said insertion pin establishes a snap connection with the receiver (5), wherein the receiver (5) on the structure comprises a support flange (51), by means of which support flange (51) said receiver rests flat against a holder (3) on the structure, and is adjustably held and attachable in the XY-plane that is arranged perpendicular in relation to the direction of connection (R_{z}),
**characterized in that** the insertion pin is designed such that when it snaps into the attachment position of the receiver (5) it activates, by means of a bolt (65), mechanical or hydraulic devices (35, 55) that firmly clamp the support flange (51) in the holder (3) on the structure.

2. The connection element of claim 1, **characterized in that** the receiver (5) comprises two recesses (53) for the insertion pin (6), which recesses (53) are spaced apart from each other in the Z-direction.

3. The connection element of claim 1 or 2, **characterized in that** the adjustability of the insertion pin (6) in the Z-direction is achieved by means of a screw thread (41).

4. The connection element of any one of the preceding claims 1 to 3, **characterized in that** the screw thread (41) is arranged between the holder (4) on the component and an anchorage part (42) of the insertion pin (6).

5. The connection element of any one of the preceding claims 1 to 4, **characterized in that** the insertion pin (6) is held in the anchorage part by means of a ball joint.

6. The connection element of any one of the preceding claims 1 to 5, **characterized in that** the attachment, of the receiver (5) on the structure, to the support flange (51) takes place by means of a retention plate (32) that is attachable to the holder (3) on the structure.

7. The connection element of any one of the preceding claims 1 to 6, **characterized in that** the receiver (5) comprises anchorages (52) preferably on the support flange (51), through which anchorages a U-shaped securing clamp (54) is insertable into the body (56) of the receiver (5), wherein the spacing (A) of the U-limbs matches the diameter (D) of the base (66) of the insertion pin (6) such that it is not possible to pull the insertion trunnion out while the securing clamp is in place.

8. The connection element of any one of the preceding claims 1 to 7, wherein the soft material of the receiver (5) is an elastomer.

## Revendications

1. Élément de liaison pour la fixation d'éléments de forme plate ou parabolique sur des structures, de préférence pour la fixation de parties de revêtement (2) sur une structure (1) d'un aéronef, comportant un support (4) du côté des éléments, sur lequel un tenon d'emboîtement (6) est maintenu réglable de manière limitée au moins perpendiculairement (direction Z Rz) à la surface (21) des éléments et à travers un logement (5) côté structure, formé d'un matériau tendre élastiquement déformable et comportant un évidement (53) pour le tenon d'emboîtement (6) qui est adapté par complémentarité de forme au contour du tenon d'emboîtement de telle sorte que ce dernier forme une liaison par encliquetage avec le logement (5), le logement (5) côté structure présentant une bride d'appui (51) lui permettant de reposer à plat sur un support (3) côté structure et d'être monté de manière réglable et fixé dans un plan XY perpendiculaire à la direction de liaison (Rz), **caractérisé en ce que** le tenon d'emboîtement est configuré de telle sorte que, lors de l'encliquetage dans la position de fixation du logement (5) au moyen d'un boulon (65), il actionne des dispositifs mécaniques ou hydrauliques (35, 55) qui bloquent la bride d'appui (51) dans le support (3) côté structure.

2. Élément de liaison selon la revendication 1, **caractérisé en ce que** le logement (5) est configuré avec deux évidements (53) pour le tenon d'emboîtement (6) qui sont distants l'un de l'autre dans la direction Z.

3. Élément de liaison selon la revendication 1 ou 2, **caractérisé en ce que** la possibilité de réglage dans la direction Z du tenon d'emboîtement (6) est obtenue à l'aide d'un filetage de vis (41).

4. Élément de liaison selon une des revendications précédentes 1 à 3, **caractérisé en ce que** le filetage de vis (41) est disposé entre le support (4) côté éléments et une pièce d'ancrage (42) du tenon d'emboîtement (6).

5. Élément de liaison selon une des revendications précédentes 1 à 4, **caractérisé en ce que** le tenon d'emboîtement (6) est maintenu dans la pièce d'ancrage avec un joint sphérique.

6. Élément de liaison selon une des revendications précédentes 1 à 5, **caractérisé en ce que** la fixation du logement (5) côté structure sur la bride d'appui (51) se fait au moyen d'une plaque de retenue (32) qui peut être fixé sur le support (3) côté structure.

7. Élément de liaison selon une des revendications précédentes 1 à 6, **caractérisé en ce que** le logement (5) présente de préférence des ancrages (52) sur la bride d'appui (51), à travers lesquels un étrier de blocage (54) en forme de U peut être emboîté dans le corps (56) du logement (5), la distance (A) de la branche en U concordant avec le diamètre (D) du pied (66) du tenon d'emboîtement (6) de telle sorte que le tenon d'emboîtement ne puisse pas être enlevé lorsque l'étrier de blocage est emboîté.

8. Élément de liaison selon une des revendications précédentes 1 à 7, **caractérisé en ce que** le matériel tendre du logement (5) est un élastomère.
